# EUROPÄISCHE PATENTSCHRIFT

(11) **EP 0 689 150 B1**
(45) Veröffentlichungstag und Bekanntmachung des Hinweises auf die Patenterteilung: **29.03.2000**
(21) Anmeldenummer: 95890115.9
(22) Anmeldetag: 23.06.1995
(51) Int. Cl.: G06K 7/08, G01S 13/02

(54) **Verfahren sowie Einrichtung zur Identifikation beweglicher Objekte**
Method and device for the identification of moving objects
Méthode et dispositif d'identification d'objets en mouvement

(30) Priorität: 23.06.1994 AT 124294
(43) Veröffentlichungstag der Anmeldung: 27.12.1995
(73) Patentinhaber: ALCATEL, 75008 Paris (FR)
(72) Erfinder: Horak, Otto, Dipl.-Ing., A-2751, Matzendorf-Hölles (AT)
(74) Vertreter: Knecht, Ulrich Karl, Dipl.-Ing.

(56) Entgegenhaltungen:
- EP-A- 0 600 556
- WO-A-93/14474
- DE-A- 3 242 551
- GB-A- 2 164 825

## Beschreibung

Die Erfindung betrifft ein Verfahren sowie eine Einrichtung zur automatischen und berührungslosen Identifikation beweglicher Objekte, die einen Transponder enthalten, der das Identifikationsmerkmal gespeichert enthält, wobei eine informationslesende Abfragestation ein Trägerfrequenzsignal aussendet, der Transponder dieses Signal empfängt und mit dem verschlüsselten Identifizierungssignal kombiniert und dieses Kombinationssignal an die Abfragestation zurücksendet, die aus dem Identifizierungssignal das Identifikationsmerkmal herausfiltert und zur Weiterverarbeitung bereitstellt.

Einrichtungen dieser Art sind bereits bekannt, haben jedoch den Nachteil, daß das drahtlos übertragene Identifikationsmerkmal leicht nachgebildet und somit mißbräuchlich verwendet werden kann. Die bekannten Einrichtungen bieten vor allem keinen Schutz vor Wiederholung der Signatur. Gegen Mißbrauch und Fälschung müssen in derartigen Einrichtungen umfangreiche Überwachungsmaßnahmen eingesetzt werden.

Es ist Aufgabe der Erfindung, bei der oben genannten Einrichtung einen möglichst wirkungsvollen aber einfachen Wiederholungsschutz vorzusehen.

Die Erfindung löst diese Aufgabe durch ein Verfahren mit den Merkmalen des Anspruchs 1. Durch Einschluß eines Zeitstempels, der eine laufende Veränderung und damit Einmaligkeit der Signatur bewirkt, wird die Signatur wiederholungsgeschützt.

In einer Weiterbildung der Erfindung ist das Hilfssignal ein von einem Zeitzeichensender abgestrahltes Zeitsignal. Das Zeitsignal des bekannten Senders DCF-77 ist länderüberdeckend verfügbar, sodaß eine damit ausgestattete Einrichtung großräumig einsetzbar ist.

Die Erfindung betrifft weiters eine Einrichtung zur automatischen und berührungslosen Identifikation beweglicher Objekte gemäß Anspruch 3.

Eine besonders vorteilhafte Ausführungsform der Erfindung sieht vor, daß der Empfänger für das Hilfssignal auf einen allgemein empfangbaren Zeitzeichensender, beispielsweise den Sender DCF-77 abgestimmt ist.

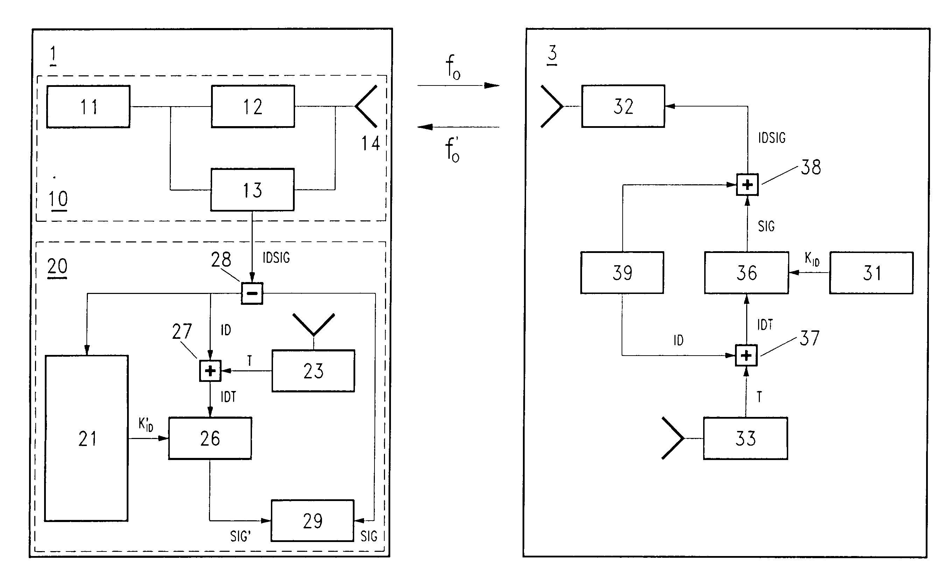

Die Erfindung wird nun anhand eines in der Zeichnung dargestellten Beispiels näher erläutert.

Die Einrichtung zur Identifizierung beweglicher Objekte besteht aus einer im Gelände fix montierten Abfragestation 1, im folgenden Interrogator genannt, und einem am beweglichen Objekt befestigten Transponder 3.

Der Interrogator 1 enthält einen HF-Teil 10 und einen Auswerteteil 20. Vom HF-Teil 10 wird ein in der HF-Quelle 11 generiertes und im Sender 12 verstärktes unmoduliertes HF-Trägersignal f₀ ausgesendet. Im vorbeibewegten Transponder 3 wird dieses empfangene Trägersignal mit dem transponderspezifischen Identifizierungssignal IDSIG moduliert und als Rücksignal f'₀ an den Interrogator 1 zurückgesendet, von diesem über die Antenne 14 und den Empfänger 13 empfangen und im Auswerteteil 20 ausgewertet.

Sowohl der Interrogator als auch der Transponder enthalten einen Zeitempfänger 23 bzw. 33, die beide gleichzeitig dasselbe Zeitsignal beispielsweise des bekannten Zeitzeichensenders DCF-77 empfangen. Dieses Funkzeitsignal ist großräumig, d.h. länderüberdeckend verfügbar. Im Transponder wird dieses Zeitsignal T in einer Konkatenationsstufe 37 mit dem im Identifikationsspeicher 39 gespeicherten Identitätsmerkmal ID zu einem Kombinationssignal IDT kombiniert und weiters in einer Verschlüsselungsstufe 36 nach einem vorgegebenen Signaturalgorithmus mit einem im Schlüsselspeicher 31 gespeicherten Identifikationsschlüssel K_{ID} zur Signatur SIG verschlüsselt. Durch weitere Konkatenation 38 dieser Signatur SIG mit dem Identitätsmerkmal ID entsteht das endgültige Identifizierungssignal IDSIG, das wie bereits erwähnt an den Interrogator zurückgestrahlt wird.

Im Auswerteteil 20 des Interrogators 1 wird das Identifizierungsignal IDSIG in einem Separator 28 wieder in das Identitätsmerkmal ID und die Signatur SIG aufgeteilt. Das Identitätsmerkmal ID wird wie im Transponder 3 mit dem vom Zeitempfänger 23 empfangenen Zeitsignal T durch Konkatenation 27 kombiniert. Dieses Kombinationssignal IDT wird mit dem im Schlüsselspeicher 21 gespeicherten Schlüssel K'_{ID} nach dem Signaturalgorithmus 26 verschlüsselt. Die daraus entstandene Signatur SIG' wird in einem Vergleicher 29 mit der aus dem Separator 28 gelieferten Signatur SIG verglichen. Die Identität von SIG und SIG' gilt als Verifikation des Identitätsmerkmals ID des Transponders 3 bzw. des damit ausgestatteten bewegten Objektes.

## Patentansprüche

1. Verfahren zur automatischen und berührungslosen Identifikation beweglicher Objekte, die einen Transponder (3) enthalten, der ein Identifikationsmerkmal (ID) gespeichert enthält, wobei eine informationslesende Abfragestation (1) ein Trägerfrequenzsignal (f₀) aussendet, der Transponder (3) dieses Signal empfängt und mit einem verschlüsselten Identifizierungssignal (IDSIG) kombiniert, welches aus einer Konkatenation des Identifikationsmerkmals (ID) und einer Signatur (SIG) besteht und dieses Kombinationssignal (f'₀) an die Abfragestation zurücksendet, die aus dem Identifizierungssignal (IDSIG) das Identifikationsmerkmal (ID) herausfiltert und zur Weiterverarbeitung bereitstellt, **dadurch gekennzeichnet**, daß das Identifikationsmerkmal (ID) im Transponder (3) zur Erzeugung des Identifizierungssignals (IDSIG) mit einem von einem im gesamten Bewegungsbereich des beweglichen Objektes empfangbaren Senders ausgestrahlten und laufenden Änderungen unterworfenen Hilfssignal (T) kombiniert, und hiermit das Kombinations signal (f'₀) erzeugt wird, dieses Kombinationssignal (f'₀) vom Transponder (3) abgestrahlt und von der Abfragestation (1) empfangen wird, daß die Abfragestation (1) ebenfalls das Hilfssignal (T) empfängt, daß aus dem empfangenen Kombinationssignal (f'₀) das Identifikationsmerkmal (ID) herausgefiltert wird, und hiermit zusammen mit dem von der Abfragestation (1) empfangenen Hilfssignal (T) eine Signatur (SIG') erzeugt wird, welche mit der im empfangenen Kombinationssignal enthaltenen Signatur (SIG) verglichen wird.

2. Verfahren nach Anspruch 1, **dadurch gekennzeichnet**, daß das Hilfsignal (T) ein von einem Zeitzeichensender (DCF-77) abgestrahltes Zeitsignal ist.

3. Einrichtung zur automatischen und berührungslosen Identifikation beweglicher Objekte, bestehend aus einem objektspezifischen Transponder (3) , der ein Identifikationsmerkmal (ID) gespeichert enthält, und einer informationslesenden Abfragestation (1), wobei die Abfragestation (1) ein Trägerfrequenzsignal (f₀) aussendet, der Transponder (3) dieses Signal empfängt und mit einem verschlüsselten Identifizierungssignal (IDSIG) kombiniert, das aus der Konkatenation einer Signatur (SIG) und des Identifikationsmerkmals (ID) besteht, und dieses Kombinationssignal (f'₀) an die Abfragestation (1) zurücksendet, die das Identifizierungssignal (IDSIG) in einer Trennstufe (28) in das Identifikationsmerkmal (ID) und die Signatur (SIG) trennt, **dadurch gekennzeichnet**, daß sowohl der Transponder (3) als auch die Abfragestation (1) einen Empfänger (33 bzw. 23) enthalten, der ein von einem im gesamten Bewegungsbereich des beweglichen Objektes empfangbaren Sender ausgestrahltes und ständigen Änderungen unterworfenes Hilfssignal (T) empfängt, daß der Transponder (3) weiters eine Konkatenationsstufe (37) enthält, die das Identifikationsmerkmal (ID) mit diesem Hilfssignal (T) kombiniert, und hiermit das Kombinations signal (f'₀) erzeugt wird und daß die Abfragestation (1) ebenfalls eine Konkatenationsstufe (27) enthält, die das abgetrennte Identifikationsmerkmal (ID) mit dem von der Abfragestation empfangenen Hilfssignal (T) kombiniert und damit eine Signatur (SIG') zum Vergleich mit der im empfangenen Kombinationssignal (f'₀) enthaltenen Signatur (SIG) erzeugt wird.

4. Einrichtung nach Anspruch 3, **dadurch gekennzeichnet**, daß der Empfänger für das Hilfssignal (T) auf einen allgemein empfangbaren Zeitzeichensender, beispielsweise den Sender DCF-77 abgestimmt ist.

## Claims

1. A process for the automatic and contactless identification of moving objects which comprise a transponder (3) which contains a stored identification feature (ID), wherein an information-reading interrogating station (1) transmits a carrier-frequency signal (f₀), the transponder (3) receives this signal, combines it with an encoded identifying signal (IDSIG) consisting of a concatenation of the identification feature (ID) and a signature (SIG), and sends back this combination signal (f'₀) to the interrogating station which filters the identification feature (ID) out of the identifying signal (IDSIG) and makes it available for further processing, characterised in that, for the generation of the identifying signal (IDSIG), in the transponder (3) the identification feature (ID) is combined with an auxiliary signal (T) which is transmitted by a transmitter receivable in the entire range of movement of the moving object and is subjected to constant changes, whereby the combination signal (f'₀) is generated, that said combination signal (f'₀) is transmitted by the transponder (3) and received by the interrogating station (1), that the interrogating station (1) likewise receives the auxiliary signal (T), and that the identification feature (ID) is filtered out of the received combination signal (f'₀), whereby, together with the auxiliary signal (T) received by the interrogating station (1), a signature (SIG') is generated, which signature (SIG') is compared with the signature (SIG) contained in the received combination signal.

2. A process according to Claim 1, characterised in that the auxiliary signal (T) is a time signal transmitted by a time signal transmitter (DCF-77).

3. A device for the automatic and contactless identification of moving objects, comprising an object-specific transponder (3) which contains a stored identification feature (ID), and an information-reading interrogating station (1), wherein the interrogating station (1) transmits a carrier-frequency signal (f₀), the transponder (3) receives this signal, combines it with an encoded identifying signal (IDSIG) consisting of the concatenation of a signature (SIG) and the identification feature (ID), and sends back this combination signal (f'₀) to the interrogating station (1) which, in a separating stage (28), separates the identifying signal (IDSIG) into the identification feature (ID) and the signature (SIG), characterised in that both the transponder (3) and the interrogating station (1) comprise a receiver (33; 23) which receives an auxiliary signal (T) which is transmitted by a transmitter receivable in the entire range of movement of the moving object and is subjected to constant changes, that the transponder (3) also comprises a concatenation stage (37) which combines the identification feature (ID) with this auxiliary signal (T), whereby the combination signal (f'₀) is generated, and that the interrogating station (1) likewise comprises a concatenation stage (27) which combines the separated identification feature (ID) with the auxiliary signal (T) received by the interrogating station, whereby a signature (SIG') is generated for comparison with the signature (SIG) contained in the received combination signal (f'₀).

4. A device according to Claim 3, characterised in that the receiver for the auxiliary signal (T) is tuned to a universally receivable time signal transmitter, for example the DCF-77 transmitter.

## Revendications

1. Procédé d'identification automatique et sans contact d'objets en mouvement qui contiennent un transpondeur (3) contenant un critère d'identification (ID) stocké en mémoire, dans laquelle une station d'interrogation lisant les informations (1) envoie un signal de fréquence porteuse (f₀), le transpondeur (3) reçoit ce signal et le combine avec un signal d'identification codé (IDSIG) composé d'un chaînage du critère d'identification (ID) et d'une signature (SIG) et renvoie ce signal combiné (f'₀) à la station d'interrogation, laquelle extrait le critère d'identification (ID) par filtrage du signal d'identification (IDSIG) et le rend disponible pour un traitement ultérieur, **caractérisée en ce que**, pour générer le signal d'identification (IDSIG), le critère d'identification (ID) est combiné dans le transpondeur (3) avec un signal auxiliaire (T) émis par un émetteur pouvant être reçu dans la totalité de la zone de déplacement de l'objet en mouvement et soumis en permanence à des modifications, générant ainsi le signal combiné (f'₀), ce signal combiné (f'₀) est émis par le transpondeur (3) et reçu par la station d'interrogation (1), **en ce que** la station d'interrogation (1) reçoit également le signal auxiliaire (T), **et en ce que** le critère d'identification (ID) est extrait par filtrage du signal combiné (f'₀) reçu et une signature (SIG') est ainsi générée à partir du signal auxiliaire (T) reçu par la station d'interrogation (1) et comparée avec la signature (SIG) contenue dans le signal combiné reçu.

2. Procédé selon la revendication 1, **caractérisée en ce que** le signal auxiliaire (T) est un signal de temps émis par un émetteur de tops horaires (DCF-77).

3. Dispositif d'identification automatique et sans contact d'objets en mouvement, composé d'un transpondeur (3), spécifique à l'objet et contenant un critère d'identification (ID) stocké en mémoire, et d'une station d'interrogation lisant les informations (1), dans lequel la station d'interrogation (1) envoie un signal de fréquence porteuse (f₀), le transpondeur (3) reçoit ce signal et le combine avec un signal d'identification codé (IDSIG) composé d'un chaînage d'une signature (SIG) et du critère d'identification (ID) et renvoie ce signal combiné (f'₀) à la station d'interrogation (1), laquelle sépare le critère d'identification (ID) et la signature (SIG) dans un étage de séparation (28), **caractérisé en ce que** le transpondeur (3) comme la station d'interrogation (1) contiennent un récepteur (33 resp. 23) qui reçoit un signal auxiliaire (T) émis par un émetteur pouvant être reçu dans la totalité de la zone de déplacement de l'objet en mouvement et soumis en permanence à des modifications, **en ce que** le transpondeur (3) contient également un étage de chaînage (37) qui combine le critère d'identification (ID) avec ce signal auxiliaire (T), **et en ce que** la station d'interrogation (1) contient également un étage de chaînage (27) qui combine le critère d'identification (ID) séparé avec le signal auxiliaire (T) reçu par la station d'interrogation, générant ainsi une signature (SIG') pour comparaison avec la signature (SIG) contenue dans le signal combiné (f'₀) reçu.

4. Dispositif selon la revendication 3, **caractérisé en ce que** le récepteur pour le signal auxiliaire (T) est calé sur un émetteur de tops horaires pouvant être reçu de manière générale, par exemple l'émetteur DCF-77.
